(19) Europäisches Patentamt / European Patent Office / Office européen des brevets

(11) **EP 1 552 628 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(51) Int Cl.:
*H04B 10/18* (2006.01)  *G02B 6/34* (2006.01)

(21) Anmeldenummer: **03770878.1**

(22) Anmeldetag: **23.09.2003**

(86) Internationale Anmeldenummer:
**PCT/DE2003/003167**

(87) Internationale Veröffentlichungsnummer:
**WO 2004/034612 (22.04.2004 Gazette 2004/17)**

(54) **VORRICHTUNG UND VERFAHREN ZUR EINSTELLUNG DER CHROMATISCHEN DISPERSION**

DEVICE AND METHOD FOR REGULATING CHROMATIC DISPERSION

DISPOSITIF ET PROCEDE DE REGLAGE DE LA DISPERSION CHROMATIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **07.10.2002 DE 10246658**

(43) Veröffentlichungstag der Anmeldung:
**13.07.2005 Patentblatt 2005/28**

(73) Patentinhaber:
• **Deutsche Telekom AG**
  **53113 Bonn (DE)**
• **NIPPON TELEGRAPH AND TELEPHONE CORPORATION**
  **Tokyo 100-8116 (JP)**

(72) Erfinder:
• **MATTHEUS, Arnold**
  **64839 Münster (DE)**
• **MIYAMOTO, Yutaka**
  **Musashino-shi**
  **Tokyo 180-8585 (JP)**
• **TOMIZAWA, Masahito**
  **Musashino-shi**
  **Tokyo 180-8585 (JP)**

(74) Vertreter: **Blumbach - Zinngrebe Patentanwälte**
**Alexandrastrasse 5**
**65187 Wiesbaden (DE)**

(56) Entgegenhaltungen:
EP-A- 0 607 782  EP-A- 1 073 221
EP-A2- 0 998 066  CA-A- 2 302 986
US-A- 5 793 917

• **"FOTP-175 Chromatic dispersion Measurement of Single-mode Optical Fibers by the Differential Phase Shift Method", TIA/EIA-455-175-A, November 1992 (1992-11), XP17001895,**
• **COHEN LEONARD G: "Comparison of Single-Mode Fiber Dispersion Measurement Techniques", JOURNAL OF LIGHTWAVE TECHNOLOGY, IEEE SERVICE CENTER, NEW YORK, NY, US, vol. LT-3, no. 5, 1 October 1985 (1985-10-01), pages 958-966, XP002157422, ISSN: 0733-8724**
• **BARLOW A J ET AL: "Technique for Direct Measurement of Single-Mode Fiber Chromatic Dispersion", JOURNAL OF LIGHTWAVE TECHNOLOGY, IEEE SERVICE CENTER, NEW YORK, NY, US, vol. LT-5, no. 9, 1 September 1987 (1987-09-01), pages 1207-1213, XP002493638, ISSN: 0733-8724, DOI: DOI:10.1109/JLT. 1987.1075646**
• **SCHLAGER J B ET AL: "Precise laser-based measurements of zero dispersion wavelength in single-mode fibers", OPTICAL FIBER COMMUNICATIONS, 1996. OFC '96 FEB. 25 - MARCH 1, 1996, PISCATAWAY, NJ, USA,IEEE, 25 February 1996 (1996-02-25), pages 293-294, XP010540007, ISBN: 978-1-55752-422-5**

EP 1 552 628 B1

- SANO A ET AL: "ADAPTIVE DISPERSION EQUALIZATION OF 8-PS PULSES IN 400-KM TRANSMISSION LINE BY MONITORING RELATIVE PHASE SHIFT BETWEEN SPACING-FIXED WDM SIGNALS", OFC/IOOC '99 OPTICAL FIBER COMMUNICATION CONFERENCE / INTERNATIONAL CONFERENCE ON INTEGRATED OPTICS AND OPTICAL FIBER COMMUNICATION. SAN DIEGO, CA, FEB. 21 - 26, 1999; [OPTICAL FIBER COMMUNICATION CONFERENCE/INTERNATIONAL CONFERENCE ON INTEGRATED O, 21 February 1999 (1999-02-21), pages WJ4-01, XP000966923, ISBN: 978-0-7803-5430-2

- AKIHIDE SANO ET AL: "Adaptive Dispersion Equalization by Monitoring Relative Phase Shift Between Spacing-FixedWDM Signals", JOURNAL OF LIGHTWAVE TECHNOLOGY, IEEE SERVICE CENTER, NEW YORK, NY, US, vol. 19, no. 3, 1 March 2001 (2001-03-01), pages 336-344, XP011029920, ISSN: 0733-8724, DOI: DOI: 10.1109/50.918885

**Beschreibung**

Die Erfindung betrifft allgemein die Kompensation und Kontrolle der chromatischen Dispersion in optischen Systemen. Insbesondere betrifft die Erfindung eine Vorrichtung und Verfahren zur Einstellung der chromatischen Dispersion.

Die chromatische Dispersion (CD) in optischen Fasern oder anderen optischen Komponenten ist ein verbreitetes physikalisches Phänomen, das allgemein bei der Übertragung optischer Signale in dispersiven Medien auftritt.

Zur Messung einer chromatischen Dispersion kann das als "Differential Phase-Shift Method" bezeichnete Meßverfahren eingesetzt werden, welches beispielsweise aus "Chromatic Dispersion Measurement of Single-Mode Optical Fibers by the Differential Phase Shift Method", FOTP-175, TIA/EIA-455-175-A, November 1992, aus "Comparison of Single-Mode Fiber Dispersion Measurement Techniques", Leonard G. Cohen, Journal of Lightwave Technology, Vol. LT-3, No.5, Oktober 1985, aus "Technique for Direct Measurement of Single-Mode Fiber.Chromatic Dispersion", Barlow et al., Journal of Lightwave Techriology, Vol. LT-5, No.9, September 1987, oder aus "Precise laser-based measurements of zero-dispersion wavelength in single-mode fibers", Schlager et al., OFC'96 Technical Digest, Februar-März 1996 bekannt ist. Bei diesem Meßverfahren wird der Dispersionskoeffizient bei einer bestimmten Wellenlänge aus der differentiellen Gruppenlaufzeit zweier benachbarter Wellenlängen bestimmt.

In hochentwickelten optischen übertragungssystemen wird die chromatische Dispersion, beispielsweise bei hohen Datenraten oder großen optischen Transparenzlängen als störender Effekt relevant. Um die chromatische Dispersion, die entlang eines optisch transparenten Übertragungsweges akkumuliert wird, zu reduzieren, ist es bekannt, dispersionskompensierende Elemente in die Übertragungswege einzufügen. Unter anderem werden dazu dispersionskompensierende Fasern (DCFs) oder Chirped Fibre Gratings eingesetzt.

Problematisch ist bei der Kompensation der chromatischen Dispersion jedoch, daß sie für eine gegebene Übertragungsstrecke im allgemeinen keinen konstanten Wert aufweist, sondern vielmehr zeitlichen Änderungen unterliegt. Solche Änderungen werden neben anderen Umwelteinflüssen unter anderem auch durch Temperaturschwankungen ausgelöst, da die chromatische Dispersion optischer Komponenten, wie zum Beispiel von Glasfasern temperaturabhängig ist.

Diese Änderungen der chromatischen Dispersion sind relativ klein, so daß die durch sie bedingte Änderung der Signalqualität bei den zur Zeit installierten Übertragungssysteme im allgemeinen vernachlässigbar ist.

Bei neueren hochentwickelten Übertragungssystemen, etwa solchen mit Datenübertragungsraten oberhalb von 10GBit/s oder sehr langen Übertragunswegen wirken sich diese Änderungen allerdings bereits sehr störend auf die optische Signalqualität aus. Für derartige Übertragungssysteme werden Verfahren zur automatischen oder adaptiven Dispersionskompensation (ADC) daher als unbedingt notwendig erachtet.

Für eine ADC sind bereits erste Realisierungsvorschläge bekannt. Eine von K. Yamane in "New functionalities for advanced optical interfaces (dispersion compensation)", Workshop on IP/Optical in Chitose, Japan, 9. - 11. Juli 2002 vorgeschlagene Vorrichtung zur ADC basiert dabei auf einem optischen Zirkulator in Verbindung mit einer komplexen Freistrahloptik mit sechs teilweise mechanisch einstellbaren optischen Komponenten. Diese Lösung ist jedoch sehr aufwendig. Zudem ist deren Langzeitstabilität fragwürdig.

Aus der US 5 793 917 A ist ein unterseeisches optisches Übertragungssystem mit einer Vielzahl auf der optischen Übertragungsstrecke verteilten optischen Verstärkern, sowie ein Verfahren und eine Vorrichtung zur Kompensation chromatischer Dispersion bekannt. Zur Kompensation der chromatischen Dispersion beschreibt die US 5 793 917 A beispielsweise ein Verfahren, bei welchem die chromatische Dispersion einer optischen Faser durch Einstellen der Temperatur eingestellt wird, wobei die Einstellung in Abhängigkeit einer gemessenen chromatischen Dispersion der optischen Übertragungsstrecke erfolgt. Zur Bestimmung der zu kompensierenden chromatischen Dispersion der optischen Übertragungsstrecke ist bei dem in US 5 793 917 A beschriebenen Verfahren wahlweise vorgesehen, an vorgegebenen Messpunkten die Temperatur des die optische Übertragungsstrecke umgebenden Seewassers oder die chromatische Dispersion eines übertragenen optischen Signals zu messen.

Aus der CA 2 302 986 A1 ist eine Vorrichtung zur Kompensation der chromatischen Dispersion in einem optischen Kommunikationssystem mittels eines geschirpten Bragg-Gitters bekannt, wobei die Eigenschaften des Bragg-Gitters durch Temperaturänderungen variiert werden.

Aus der EP 0 607 782 A1 ist ein optischer Dispersionskompensator bekannt, welcher einen Lichtwellenleiter mit einem Beugungsgitter zur Dispersionskompensation aufweist, wobei der Lichtwellenleiter geeignet ist, elektrisch und/oder thermisch eine Dispersionskompensationswellenlänge und eine Dispersionskompensationsintensität anzupassen.

Ferner ist aus EP 1 073 221 A1 ein optisches Übertragungssystem mit automatischen dispersionskompensierenden Modulen bekannt, wobei jedes Modul ein einstellbares Dispersionsalement, einen Datenunversehrtheitsmonitor und ein Rückkopplungsnetzwerk aufweist, wodurch der Monitor das Dispersionselement einstellt, um eine Systemleistungsfähigkeit zu optimieren.

Der Erfindung liegt daher die Aufgabe zugrunde, die Kompensation der chromatische Dispersion zu vereinfachen. Diese Aufgabe wird bereits durch eine Vorrichtung gemäß Anspruch 1, ein optisches übertragungssystem gemäß Anspruch 7, sowie ein Verfahren gemäß Anspruch 11 gelöst. Vorteilhafte Weiterbildungen sind Gegenstand der jeweiligen Unteransprüche.

Demgemäß umfaßt eine erfindungsgemäße Vorrichtung zur Einstellung der chromatischen Dispersion in einem optischen Übertragungssystem

- ein optisches Element mit einer temperaturabhängigen chromatischen Dispersion, sowie
- eine Einrichtung zur Einstellung einer Temperatur oder einer Temperaturverteilung zumindest eines Bereichs des optischen Elements zum Bereitstellen einer vordefinierten chomatischen Dispersion des optischen Elements.

Diese Einheit mit einem optischen Element mit temperaturabhängiger chromatischer Dispersion und einer Einrichtung zur Einstellung einer Temperatur oder einer Temperaturverteilung stellt dabei ein neuartiges Bauteil dar, welches im folgenden auch als OCET ("Optical Chromatic Dispersion Control Element using Temerature control") bezeichnet.

Es liegt außerdem im Rahmen der Erfindung, ein optisches Übertragungssystem anzugeben, welches erfindungsgemäß zumindest ein solches OCET aufweist, welches zwischen einem Sender und einem Empfänger im optischen Pfad des Übertragungssystems eingebaut ist, so daß Schwankungen der chromatischen Dispersion durch geeignete Einstellung des OCETs ausgeglichen werden können.

Dergleiche Effekt, welcher wesentlich zu zeitlichen Schwankungen der chromatischen Dispersion in optischen Übertragungssystemen führt, nämlich die Temperaturschwankungen, denen die optischen Elemente des Übertragungssystems ausgesetzt sind, macht sich die Erfindung also in überraschend einfacher Weise zunutze, um vorbestimmte Werte der chromatischen Dispersion entlang der Übertragungsstrecke einstellen zu können.

Gemäß dem erfindungsgemäßen Verfahren zur Einstellung der chromatischen Dispersion in einem optischen Übertragungssystem wird dazu eine vorbestimmte Temperatur oder eine Temperaturverteilung zumindest eines Bereichs des optischen Elements eingestellt, so daß das optische Element eine vorbestimmte chomatische Dispersion aufweist.

Dabei kann die chromatische Dispersion des optischen Elements durch Einstellung der Temperatur oder der Temperaturverteilung bevorzugt so eingestellt werden, daß die chromatische Dispersion der Übertragungsstrecke kompensiert wird. Ebenso kann aber auch eine Einstellung der Dispersion auf einem bestimmten Wert erreicht werden. Dies ist beispielsweise dann sinnvoll, wenn zusätzliche Elemente zur Kompensation der chromatischen Dispersion entlang des optischen Pfades eingefügt werden. Außerdem kann mit einem OCET die chromatische Dispersion des gesamten Übertragungssystems auch gezielt auf einen von Null verschiedenen Wert eingestellt oder ein Wertebereich durchfahren oder durchgestimmt werden, um beispielsweise die Toleranz des optischen Übertragungssystems gegenüber Schwankungen der chromatischen Dispersion, beziehungsweise den Einfluß solcher Schwankungen auf die Signal- und Übertragungsqualität zu testen.

Vorteilhaft kann die Einrichtung zur Einstellung einer Temperatur oder Temperaturverteilung eine Temperaturkammer umfassen. Damit läßt sich die Umgebungstemperatur des optischen Elements einstellen, so daß die Temperaturdifferenz zwischen dem optischen Element und der Umgebung verschwindet. Auf diese Weise läßt sich die Temperatur oder die Temperaturverteilung des optischen Elements und damit das OCET gut stabilisieren.

In besonders einfacher und bevorzugter Weise läßt sich ferner die Temperatur des optischen Elements mittels einer Heizvorrichtung verändern. Vorteilhaft wird dabei das optische Element so ausgebildet, daß es bei Zimmertemperatur dann den zu erreichenden oder einzustellenden Wert der chromatischen Dispersion des Übertragungssystems überkompensiert, so daß bei entsprechender Temperaturerhöhung der gewünschte Wert erreicht werden kann. Vorteilhaft kann dazu das optische Element ein Material umfassen, welches einen Dispersionskoeffizienten aufweist, der ein gegenüber dem Dispersionskoeffizienten des optischen Übertragungssystems umgekehrtes Vorzeichen aufweist. Gerade durch die Verwendung eines solchen Materials kann dann eine Überkompensation erreicht werden.

Besonders leicht kann außerdem eine Einstellung einer vorbestimmten chromatischen Dispersion des optischen Elements dann erreicht werden, wenn das optische Element ein Material umfaßt, welches eine im wesentlichen monotone oder sogar lineare Abhängigkeit der chromatischen Dispersion von der Temperatur aufweist, so daß jeder chromatischen Dispersion innerhalb des einstellbaren Wertebereiches ein eindeutiger Temperaturwert zugeordnet werden kann.

Der Effekt der Temperaturabhängigkeit der chromatischen Dispersion ist, wie bereits oben erwähnt, nur sehr klein. Um eine hinreichend große Kompensation erreichen zu können, ist es daher von Vorteil, wenn das Licht einen möglichst langen Weg innerhalb des temperaturbeeinflußten Materials des optischen Elements zurücklegt. Dies kann besonders einfach dadurch erreicht werden, indem eine optische Faser, wie beispielsweise eine Glasfaser als optisches Element verwendet wird. Diese kann dann auch raumsparend aufgewickelt werden. Außerdem basieren optische Übertragungssysteme überwiegend auf der Signalübertragung durch Glasfasern. Bei derartigen Systemen kann die Kopplung der Übertragungsfasern dann mit der Glasfaser des OCET beispielsweise durch verlustarme Spleißung erfolgen.

Für eine Stabilisierung der eingestellten chromatischen Dispersion ist es insbesondere vorteilhaft, wenn die Einrichtung zur Einstellung zur Einstellung einer Temperatur oder Temperaturverteilung eine Thermostateinrichtung umfaßt, welche dafür sorgt, daß die eingestellten Temperaturen aufrechterhalten bleiben. Auch eine Einrichtung zur Messung der Umgebungstemperatur zumindest eines Abschnitts des optischen Elements kann vorteilhaft sein, um eine Regelgröße zur Temperaturstabilisierung bereitzustellen. Dies ist beispielsweise dann günstig, wenn eine Temperaturkammer eingesetzt wird, deren Innentemperatur einen guten und genauen Durchschnittswert für die Temperatur des in der Kammer angeordneten optischen Elements darstellt.

Besonders bevorzugt wird die chromatische Dispersion des OCETs nicht nur lediglich eingestellt, sondern auch gesteuert. Dazu umfaßt die Einrichtung zur Einstellung einer Temperatur oder Temperaturverteilung vorteilhaft eine Temperatursteuerungseinrichtung. Zur Steuerung der Temperatur oder der Temperaturverteilung des optischen Elements können verschiedene Parameter verwendet werden, die von der Temperatursteuerungseinrichtung verarbeitet werden.

Um eine adaptive Dispersionskompensation oder Stabilisierung zu erreichen, wird bevorzugt die chromatische Dispersion im optischen Übertragungssystem oder einem Abschnitt desselben gemessen und die Temperatur oder Temperaturverteilung des optischen Elements des OCET in Abhängigkeit der Messung eingestellt. Dazu kann beispielsweise das OCET selbst eine Einrichtung zur Messung der chromatischen Dispersion umfassen, deren Meßwerte dann direkt zur Temperatursteuerung mit der Temperatursteuerungseinrichtung genutzt werden können.

Ebenso kann aber eine solche Meßeinrichtung auch Bestandteil des optischen Übertragungssystems außerhalb des OCET sein und die Meßwerte oder diesen entsprechende Signale an das OCET übergeben. Die Temperatursteuerungseinrichtung des OCETs kann dann die Temperatur in Abhängigkeit eines solchen Signals und damit die chromatische Dispersion von dessen optischen Element regeln.

Die Ermittlung der chromatischen Dispersion im optischen Übertragungssystem kann auch indirekt durch Messen der Temperatur an wenigstens einer Stelle im optischen Übertragungssystem durchgeführt werden, wenn die Abhängigkeit der chromatischen Dispersion im optischen Übertragungssystem von der Temperatur bekannt ist.

Eine Möglichkeit zur direkten Bestimmung der vorhandenen chromatischen Dispersion zumindest eines Abschnitts des Übertragungssystems kann beispielsweise durch Einspeisen eines Testsignals mit einer entsprechenden Einrichtung und Auswerten des Testsignals erfolgen. Das Testsignal kann dann nach Durchlaufen zumindest eines Teils des Übertragungssystems von einer Einrichtung zur Messung der chromatischen Dispersion ausgewertet werden. Geeignet hierfür ist insbesondere die Messung der differentiellen Phasenverschiebung wellenlängenmodulierter Testsignale.

Insbesondere bei langen Übertragungsstrecken kann es auch vorteilhaft sein, wenn mehrere OCETs im Übertragungssystem angeordnet werden. Beispielsweise kann jeweils eine OCET in einem Abschnitt des Übertragungssystems zwischen zwei Verstärkern angeordnet werden. Werden demgemäß mehrere OCETs entlang des optischen Pfades hintereinander angeordnet, so beeinflussen sich deren Einstellungen gegenseitig. Dementsprechend ist es von Vorteil, wenn die Temperatur oder Temperaturverteilung eines optischen Elements mit einer temperaturabhängigen chromatischen Dispersion in Abhängigkeit von der Einstellung zumindest eines weiteren Elements mit einer temperaturabhängigen chromatischen Dispersion im optischen Übertragungssystem eingestellt wird, um die Einstellungen der optischen Elemente der OCEts aufeinander abzustimmen. Beispielsweise können die OCETs miteinander vernetzt und so deren Einstellungen untereinander koordiniert werden. Dies kann vorteilhaft zum Beispiel über einen optischen Überwachungskanal geschehen. Vorteilhaft können die OCETs über einen solchen Überwachungskanal mit einer Recheneinrichtung zur Ermittlung der Einstellungen der Vorrichtungen verbunden sein. Diese kann dann entsprechend den ermittelten günstigsten Einstellungen der OCETs über den Überwachungskanal die jeweiligen Einstellparameter übermitteln.

Oft sind, um höhere Übertragungsbandbreiten zu realisierten, mehrere Übertragungsfasern in einem optischen Übertragungssystem parallel geführt. Zeigen die einzelnen Zweige eines solche Übertragungssystems unterschiedliche Schwankungen in der chromatischen Dispersion, so können hier vorteilhaft mehrere OCETs parallel betrieben werden, welche eine individuelle Stabilisierung einzelner Zweige bereitstellen. Vielfach werden aber auch die Schwankungen der einzelnen Zweige im wesentlichen gleich sein, da beispielsweise bei einer durch Temperaturänderung ausgelösten Schwankung der Dispersion sich die Temperaturänderungen im wesentlichen entlang des optischen Pfades ergeben und zwischen den einzelnen Faser zumeist vernachlässigbar sind. In diesem Fall ist eine Weiterbildung der erfindungsgemäßen Vorrichtung von Vorteil, bei welcher die OCET zumindest zwei optische Elemente mit separaten Ein- und Ausgängen umfaßt, die also nicht entlang eines optischen Pfades hintereinander angeordnet sind und die eine temperaturabhängige chromatische Dispersion aufweisen. Die chromatische Dispersion dieser Elemente kann dann mittels der Einrichtung zur Einstellung der Temperatur oder Temperaturverteilung zusammen durch eine gemeinsame Temperatureinstellung eingestellt werden.

Die Erfindung wird nachfolgend genauer anhand beispielhafter Ausführungsformen und unter Bezugnahme auf die beigefügten Zeichnungen dargestellt. Dabei verweisen gleiche Bezugszeichen auf gleiche oder ähnlichen Teile.

Es zeigen:

Fig. 1A bis 1C    Beispiele optischer Übertragungsstrecken mit Stabilisierung oder Einstellung der chromatischen Dispersion durch OCETs,

Fig. 2    ein Ausführungsbeispiel zur Bestimmung der chromatischen Dispersion durch Messung von differentieller Phasenverschiebung,

Fig. 3    eine schematische Darstellung eines optisch transparenten Pfades

Fig. 4    eine Ausführungsform einer OCET mit mehreren optischen Elementen, und

Fig. 5    eine weitere Ausführungsform einer optischen Übertragungsstrecke.

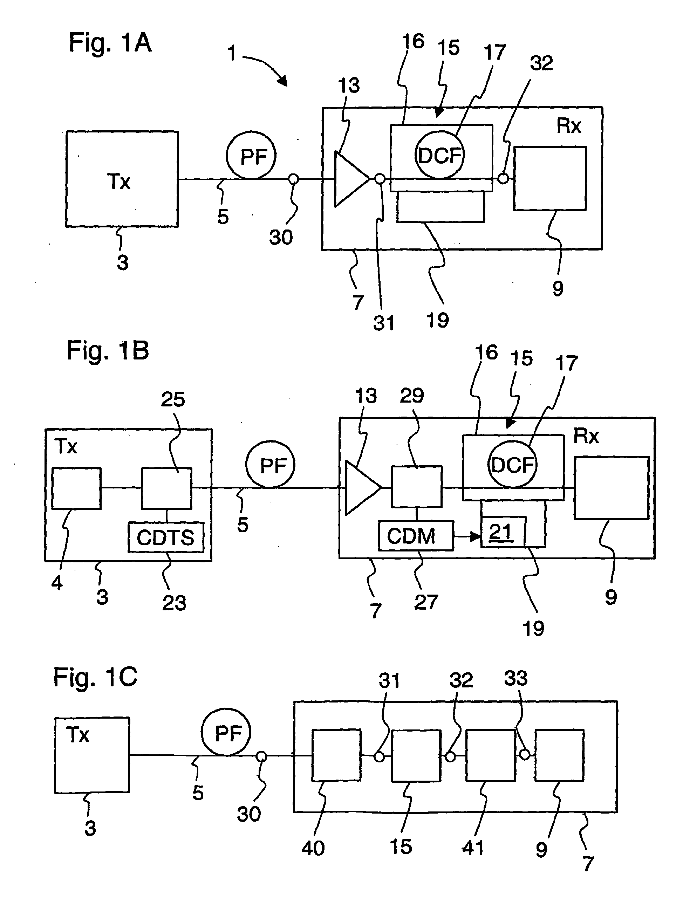

In den Figuren 1A bis 1C sind verschiedene mögliche Ausführungsbeispiele als ganzes mit 1 bezeichneter optischer Übertragungsstrecken mit Verwendung von OCETs dargestellt, die im folgenden beschrieben werden.

In Fig. 1A ist ein einfaches Ausführungsbeispiel einer optischen Übertragungsstrecke 1 mit Stabilisierung der chromatischen Dispersion durch ein OCET 11 gezeigt. Die Übertragungsstrecke 1 umfaßt einen Sender 3, eine Übertragungsfaser 5 und einen Empfänger 7. Der Empfänger 7 der optischen Übertragungsstrecke umfaßt einen Detektor 9 zur Erfassung der übertragenen optischen Signale, sowie einen optionalen optischen Verstärker 13, wie beispielsweise einen Faserverstärker.

Zwischen dem optischen Verstärker 13 und dem Detektor ist ein als Ganzes mit 15 bezeichnetes OCET im optischen Pfad angeordnet. Das OCET umfaßt seinerseits ein optisches Element mit einer temperaturabhängigen chromatischen Dispersion in Form einer dispersionskompensierenden Faser 17, die innerhalb einer Temperaturkammer 16 angeordnet ist, sowie eine Einrichtung 19 zur Einstellung einer Temperatur oder einer Temperaturverteilung zumindest eines Bereichs des optischen Elements, die im folgenden als Temperaturstelleinrichtung bezeichnet wird. Diese kann eine Heizvorrichtung zum Einstellen einer vordefinierten Temperatur innerhalb der Temperaturkammer umfassen. Durch Einstellung einer bestimmten Temperatur kann so eine vordefinierte chromatische Dispersion der dispersionskompensierenden Faser 15 bereitgestellt werden.

Die zwischen Sender 3 und Detektor 9 übermittelten optischen Datensignale unterliegen a priori keinen einschränkenden Randbedingungen. So können zum Beispiel optische Einkanal-Signale oder auch Mehrkanalsignale, beziehungsweise WDM-Signale (WDM="Wavelength Division Multiplexing") übertragen werden.

Die gesamte chromatische Dispersion $<D_{tot}>$ zwischen Sender und Detektor setzt sich im wesentlichen aus den Dispersionsanteilen der Dispersion $<D_P>$ der optischen Übertragungsfaser 5, der Dispersion $<D_{OA}>$ des optischen Verrstärkers und der Dispersion $<D_C>$ der dispersionskompensierenden Faser 17 des OCET 15 zusammen. Es gilt also:

$$(1)\quad <D_{tot}> = <D_P> + <D_{OA}> + <D_C>$$

Die gesamte chromatische Dispersion $<D_{tot}>$ kann beispielsweise durch bei der Systeminstallation in den optischen Pfad eingefügte kompensierende Elemente auf einen akzeptablen Wert gesetzt werden, der eine hinreichend gute optische Signalqualität am Eingang des Detektors 9 ergibt.

Die Gleichung ist selbstverständlich beispielhaft zu verstehen, da eine optische Übertragungsstrecke auch andere, insbesondere auch mehr optische Elemente aufweisen kann, die temperaturabhängige chromatische Dispersion zeigen.

Die einzelnen Anteile der Dispersion können jedoch zeitlichen Schwankungen, $<\Delta D_P>$, $<\Delta D_{OA}>$ und $<\Delta D_C>$ unterworfen sein, so daß sich eine im allgemeinen zeitabhängige Gesamtabweichung der chromatischen Dispersion

$$(2)\quad <\Delta D_{tot}> = <\Delta D_P> + <\Delta D_{OA}> + <\Delta D_C>$$

ergibt.

Die Schwankungen der chromatischen Dispersion der optischen Übertragungsfaser 5 und des optischen Verstärkers 13 werden in der Regel durch veränderte Umgebungsbedingungen hervorgerufen. Beispielsweise kann sich die Umgebungstemperatur einer oder mehrerer Komponenten, etwa zwischen Tag und Nacht oder Sommer und Winter ändern. Auch nicht temperaturbedingte Änderungen, etwa durch Schwankungen des mechanischen Stresses können zu Schwankungen der chromatischen Dispersion führen.

Die im allgemeinen zeitabhängigen Schwankungen $<\Delta D_P>$ und $<\Delta D_{OA}>$ der chromatischen Dispersion von optischer Übertragungsfaser und Verstärker können nun mit Hilfe der OCET 15 stabilisiert werden, indem die Temperatur der dispersionskompensierenden Faser 17 mittels der Einrichung 19 so eingestellt wird, daß gilt:

$$(3)\quad <\Delta D_C> = -(<\Delta D_P> + <\Delta D_{OA}>),$$

so daß

$$(4) \quad <\Delta D_{tot}> \ = \ 0$$

erreicht wird.

Die chromatische Dispersion kann dabei nicht nur stabilisiert werden, so daß der Wert von $<D_{tot}>$ konstant ist. Vorteilhaft kann die chromatische Dispersion auf diese Weise auch kompensiert werden, so daß $<D_{tot}>$ einen möglichst kleinen Wert annimmt oder sogar verschwindet.

Nachfolgend wird erläutert, wie die Temperatur eines optischen Elements einer OCET, wie insbesondere einer dispersionskompensierenden optischen Faser eingestellt werden kann, um eine vordefinierte chomatischen Dispersion des optischen Elements zu erreichen.

Die Änderung $<\Delta D>$ der chromatischen Dispersion einer optischen Faser in Abhängigkeit der Temperaturänderung $\Delta T$ läßt sich in guter Näherung durch folgende Gleichung ausdrücken:

$$(5) \quad <\Delta D> \ = \ (dD/d\lambda) \cdot (d\lambda_0/dT) \cdot L \cdot \Delta T . \cdot$$

Dabei bezeichnet D den Dispersionskoeffizient, L die Länge der optischen Faser, $\lambda$ die Wellenlänge und $\lambda_0$ die Nulldispersionswellenlänge. Diese Gleichung kann einfacher geschrieben werden als:

$$(6) \quad <\Delta D> \ = \ S_0 \cdot M_0 \cdot L \cdot \Delta T .$$

Dabei ist $S_0 = (dD/d\lambda)$ die Steigung und $M_0 = (d\lambda_0/dT)$ der Temperaturkoeffizient der chromatischen Dispersion.

Bei einer Glasfaser mit gegebener Länge L sind also die Änderung $<\Delta D>$ der chromatischen Dispersion und die Temperaturänderung $\Delta T$ näherungsweise proportional zueinander.

Im folgenden wird weiter gezeigt, wie eine Änderung der chromatischen Dispersion $<\Delta D_P>$ einer optischen Übertragungsfaser mittels einer OCET ausgeglichen und so die chromatische Dispersion des Übertragungssystems stabilisiert werden kann. Der Index "P" kennzeichnet dabei Größen der Übertragungsfaser und der Index "C" Größen des optischen Elements der OCET am Beispiel einer dispersionskompensierendn Faser. Der Index "0" kennzeichnet ferner Anfangswerte.

Die Summendispersion $<\Delta D_{tot}>$ beider Glasfasern soll auf einen Anfangswert

$$(7) \quad <D_{tot,0}> \ = \ <D_{P,0}> \ + \ <D_{C,0}>$$

stabilisiert werden, so daß die Differenz zwischen momentaner Summendispersion $<D_{tot}(t)>$ und anfänglicher Summendispersion $<D_{tot,0}>$ auf Null geregelt wird. Anders ausgedrückt soll die Summe der Änderungen der chromatischen Dispersion beider Glasfasern gleich Null sein, also:

$$(8) \quad <\Delta D_P> \ + \ <\Delta D_C> \ = 0 .$$

Aus Gleichung (6) ergibt sich daraus:

$$(9) \quad \Delta T_C \ = \ -<\Delta D_P> / (S_{0,C} \cdot M_C \cdot L_C) .$$

Als dispersionskompensierendes optisches Element der OCET kann dazu jede Glasfaser verwendet werden, mit der die auftretenden Schwankungen $<\Delta D_P>$ gemäß der Beziehung (9) durch Temperaturänderung nachgesteuert werden können.

Die gewünschte Summendispersion kann als reelles Vielfaches $\varepsilon$ von $<\Delta D_P>$ ausgedrückt werden, also durch $<D_{tot,0}> = \varepsilon \cdot <\Delta D_{P,0}>$. Weiterhin ist die chromatischen Dispersion einer Glasfaser das Produkt aus Dispersionskoeffizienten D und Länge L, so daß gilt:

$$(10) \quad \langle D_{tot,0} \rangle = \varepsilon \cdot \langle \Delta D_{P,0} \rangle = D_P \cdot L_P + D_C \cdot L_C.$$

Mit $D_P$ und $D_C$ werden die Dispersionskoeffizienten der beiden optischen Fasern bezeichnet. Zusammen mit Gleichung (9) folgt daraus schließlich:

$$(11) \quad \Delta T_C = \Delta T_P \cdot (M_{0,P}/M_{0,C}) \cdot (D_C/S_{0,C}) \cdot ([1-\varepsilon]D_P/S_{0,P})^{-1}.$$

Für den Fall, daß keine Restdispersion vorliegen soll, so daß also $\langle D_{tot,0} \rangle = \varepsilon = 0$ gilt, geht Gleichung (11) über in

$$(12) \quad \Delta T_C' = \Delta T_P \cdot (M_{0,P}/M_{0,C}) \cdot (D_C/S_{0,C}) \cdot (D_P/S_{0,P})^{-1}.$$

Soll eine Stabilisierung der chromatischen Dispersion einer optischen Übertragungsstrecke erreicht werden, so ist also die Temperatur gemäß Gleichung (12) einzustellen. Soll die Dispersion mittels einer OCET sogar kompensiert werden, so kann die Temperatur des optischen Elements der OCET gemäß Gleichung (12) eingestellt werden. Wird beispielsweise die Temperatur der optischen Übertragungsfaser gemessen, so ergibt sich aus Gleichung (11), beziehungsweise Gleichung (12) eine bestimmte Temperaturdifferenz DT, welche die dispersionskompensierende Faser des OCETs zur Stabilisierung oder Kompensation der Dispersion aufweisen muß, so daß sich deren einzustellende Temperatur aus der Temperatur der optischen Übertragungsfaser plus der Temperaturdifferenz gemäß obigen Gleichungen errechnet.

Der Temperaturkoeffizient $M_0$ hängt vom Material des optischen Elements der OCET ab und liegt typischerweise zwischen 0,0026 nm/°K und 0,03 nm/°K. Werte für Temperaturkoeffizienten geeigneter Materialien sind unter anderem in K.S.Kim et al., "Temperature dependence of chromatic dispersion iun dispersion shifted fibers: experiment and analysis", Journal Appl. Phys. 73, Seiten 2069-2074, 1993 angegeben. Typische Werte für die Dispersionskoeffizienten D und die Steigungen $S_0$ um 1550 nm Wellenlänge sind in der nachstehenden Tabelle für Standard-Einmodenfasern und für einige Typen von dispersionskompensierenden Fasern gegeben:

|  | D [ps/(nm·km)] | $S_0$ [ps/(nm$^2$·km) ] | $D/S_0$ [nm] |
|---|---|---|---|
| Standard-Einmodenfaser | 17 | 0,057 | 298 |
| dispersionskompen-sierende Faser 1 | -48,6 | +0,053 | -917 |
| dispersionskompen-sierende Faser 2 | -50,8 | -0,154 | 330 |
| dispersionskompen-sierende Faser 3 | -100 | -0,3 | 330 |

Die in der Tabelle angegebenen Werte für die Standar-Einmodenfaser und die dispersionskompensierende Faser 3 sind der oben aufgeführten Veröffentlichung von K.S.Kim et al. und die Werte der beiden anderen dispersionskompensierenden Fasern aus T.Kato, Y.Koyano, M.Nishimura, "Temperature dependence of chromatic dispersion in various types of optical fiber", Opt. Lett., Vol. 25, No. 16, Seiten 1156 - 1158, 2000 entnommen. Der Offenbarungsgehalt beider Veröffentlichungen wird hiermit vollständig auch zum Gegenstand der vorliegenden Erfindung gemacht.

Ändert sich die chromatische Dispersion der optischen Komponenten häufig, so ist es von Vorteil, wenn die Temperaturstelleinrichtung eine Temperatursteuerungseinrichtung umfaßt, bei welcher nicht lediglich ein fester Wert der Temperatur der Faser 17 einstellbar ist, sondern die zusätzlich deren Temperatur in Abhängigkeit von Meßgrößen regelt. So kann insbesondere die chromatische Dispersion an einem oder mehreren der in Fig. 1A eingezeichneten Meßpunkte 30, 31, 32 mit einer geeigneten Einrichtung gemessen werden. Den Meßwerten entsprechende Signale können dann an die Temperatursteuerungseinrichtung übergeben werden, welche die Temperatur der dispersionskompensierenden Faser 17 dann in Abhängigkeit von diesen Signalen einstellt.

Die chromatische Dispersion kann auch indirekt bestimmt werden. Beispielsweise kann die chromatische Dispersion im optischen Übertragungssystem 1 durch Messen der Temperatur an wenigstens einem der Meßpunkte 20, 21, 22 im optischen Übertragungssystem ermittelt werden. Aus einer Kalibrierungsmessung können dann den Temperaturmeßwerten jeweils eine chromatische Dispersion zugeordnet werden. Eine solche Art der indirekten Messungen berücksichtigt selbstverständlich nur Änderungen der chromatischen Dispersion aufgrund von Temperaturschwankungen, denen die optischen Elemente des Übertragungssystems ausgesetzt sind.

Ein weiteres Ausführungsbeispiel einer dispersionsstabilisierten Übertragungsstrecke ist in Fig. 1B dargestellt.

Bei diesem Ausführungsbeispiel umfaßt die Temperaturstelleinrichtung 19 der OCET eine Temperatursteuerungseinrichtung 21. Der Sender 3 umfaßt eine optische Signalquelle 4 zur Umsetzung von Daten in optische Signale, sowie einen Testsignal-Generator 23. Die Signale der optischen Signalquelle 4 und des Testsignal-Generators 23 werden mit einem Koppler 25 gekoppelt und zusammen über die optische Übertragungsfaser 5 gesendet. Der Testsignal-Generator erzeugt ein Testsignal, welches zur Messung der chromatischen Dispersion verwendet wird.

Der Empfänger 7 umfaßt in dieser Ausführungsform neben dem optischen Verstärker 13, der OCET 15 und dem Detektor 9 außerdem einen weiteren Koppler 29 zur Entkopplung des Testsignals und der optischen Datensignale. Die entkoppelten Datensignale werden weiter entlang des optischen Pfades über das OCET 15 zum Detektor 9 geleitet. Die Testsignale werden vom Koppler 29 an einen CD-Monitor, beziehungsweise eine Meßeinrichtung zur Messung der chromatischen Dispersion 27 geleitet, welcher anhand dieser Testsignale die chromatische Dispersion des zwischen Signalquelle 4 und Koppler 29 liegenden Abschnitts der Übertragungsstrecke bestimmt. Die Meßwerte können dann in entsprechende Signale umgesetzt werden, die an die Temperatursteuerungseinrichtung 21 übergeben werden, welche in Abhängigkeit dieser Signale, beziehungsweise den diesen entsprechenden Meßwerten die Temperatur der Faser 17 einstellt, so daß diese eine bestimmte chromatische Dispersion aufweist.

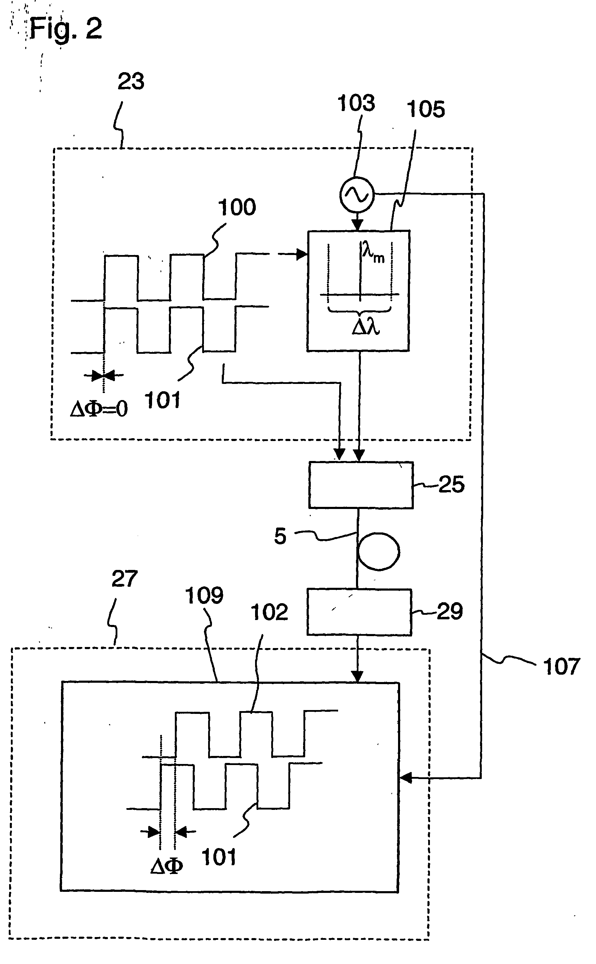

Insbesondere geeignet zur Messung der chromatischen Dispersion mittels Testsignalen ist dabei das Verfahren der Messung der differentiellen Phasenverschiebung wellenlängenmodulierter Testsignale. Eine mögliche Anordnung zur Implementierung dieses Verfahrens in eine wie in Fig. 1B gezeigte Ausführungsform einer optischen Übeertragungsstrecke ist dabei schematisch in Fig. 2 dargestellt. Dabei wird ein schmalbandiges Testsignal 102 um eine Mitten-Wellenlänge herum periodisch moduliert. Dies geschieht beispielsweise, indem ein breitbandigeres Testsignal 100 durch einen modulierten Filter oder einen Modulator 105, wie beispielsweise ein oszillierendes Gitter gefiltert wird. Dieses Testsignal 102 wird dann zusammen mit einem Referenzsignal 101 über den Koppler 25 in die Übertragungsstrecke eingekoppelt. Beide Signale sind außerdem in geeigneter Weise zeitlich moduliert. Bevorzugt umfassen dazu die Signale eine Abfolge von Impulsen, wie insbesondere von Rechteckimpulsen.

Bei der Übertragung dieser Signale ergibt sich aufgrund der chromatischen Dispersion dann eine Änderung der relativen zeitlichen Lage der Impulse von Testsignal 102 und Referenzsignal 101, die sich als Phasenverschiebung zwischen den Impulsen äußert. Diese kann dann vom CD-Monitor 27 mit hoher Genauigkeit mittels eines synchronisierten Verstärkers, beziehungsweise Lock-in-Verstärker 109 erfaßt werden. Aus einer solchen Phasenverschiebung $\Delta\Phi$ ergibt sich dann der Wert der chromatischen Dispersion zur Mittenwellenlänge des Testsignals.

Das Lock-In-Verfahren erfordert jedoch eine Synchronisation zwischen Testsignal-Generator und CD-Monitor. Um die Phasenverschiebung synchronisiert messen zu können, wird die Modulationsfrequenz und Modulationsphase vom Lock-In-Verstärker, beispielsweise in Form eines der Modulation des Testsignals entsprechenden Signals benötigt. Dazu umfaßt der Testsignal-Generator 23 beispielsweise einen Modulationsfrequenz-Generator 103. Mit der vom Modulationsfrequenz-Generator 103 erzeugten Modulationsfrequenz wird dann der Modulator 105 gesteuert, beziehungsweise das schmalbandige Testsignal 102 moduliert. Gleichzeitig wird die Modulationsfrequenz des Generators 103 über einen optischen Überwachungskanal 107 an den Lock-in-Verstärker übertragen. Der Überwachungskanal 107 kann dabei aufgrund des geringen Informationsgehaltes sehr schmalbandig ausgelegt sein. Der Überwachungskanal kann über eine getrennte Leitung realisiert werden, kann aber ebenso auch als schmalbandiges Frequenzband über die optische Übertragungsleitung übertragen werden.

Aus diesen Messungen kann dann ein geeignetes, der chromatischen Dispersion entsprechendes Signal generiert werden, welches an die Temperatursteuerungseinrichtung des OCET übertragen wird.

Geeignet zur Bestimmung der chromatischen Dispersion mit Hilfe von Testsignalen sind unter anderem auch OTDR-Messungen (OTDR="Optical Time Domain Reflectometry") oder Laufzeit-Photonenzählung. Beide Verfahren basieren auf Laufzeitmessungen optischer Signale.

Fig. 1C zeigt ein weiter verallgemeinertes Ausführungsbeispiel einer optischen Übertragungsstrecke 1. Hier weist der Empfänger 7 zwei optisch transparente Elemente 40 und 41 auf, von denen entlang des optischen Pfades ein Element 40 vor und das weitere Element 41 hinter dem OCET angeordnet ist. Selbstverständlich kann beispielsweise eines der Elemente 40, 41 auch einen optischen Verstärker umfassen.

Als optisch transparente Elemente werden beliebige optische Elemente verstanden, in denen ein optisches Signal optisch transparent transportiert oder verarbeitet wird. Beispiele solcher optisch transparenter Elemente sind optische Verstärker, optische Multiplexer und Demultiplexer, optische Filter, optische Add/Drop-Multiplexer und Glasfaserelemente, sowie auch Kombinationen aus solchen Elementen. Ebenso stellt selbstverständlich eine erfindungsgemäße OCET ein solches optisch transparentes Element dar. Jedenfalls unterliegen optische Signale, welche optisch transparente Elemente durchlaufen, der chromatischen Dispersion des transparenten oder teilweise Materials diese Elemente.

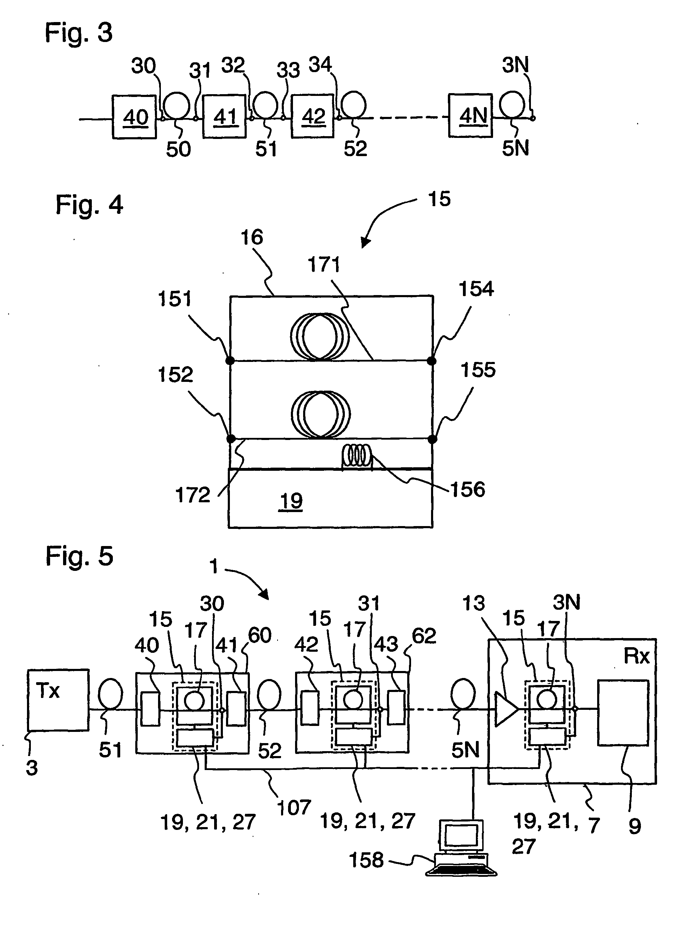

Dementsprechend kann ein OCET die chromatische Dispersion eines beliebigen optischen Pfades, wie er beispielsweise in Fig. 3 dargestellt ist, innerhalb eines gewissen Bereichs auftretender Schwankungen der Dispersion stabilisieren. Ein optisch transparenter Pfad, wie er in Fig. 3 gezeigt ist, umfaßt eine Anordnung aufeinanderfolgender optisch transparenter Elemente 40, 41, ..., 4N und Übertragungsfasern 51, 52, ..., 5N. Die Dispersion kann an einem oder mehreren der Meßpunkte 50, 51, ...5N bestimmt werden.

Generell kann eine Übertragungsfaser außerdem aus mehreren hintereinander angeordneten Fasern zusammengesetzt sein, die auch unterschiedliche Materialien umfassen und damit auch unterschiedliche chromatische Dispersionen aufweisen können.

Fig. 4 zeigt eine weitere Ausführungsform einer OCET 15. Diese zeichnet sich dadurch aus, daß sie mehr als ein dispersionskompensierendes optisches Element aufweist. Die in Fig. 4 dargestellte beispielhafte Ausführungsform weist diesbezüglich zwei dispersionskomensierende Faser 171, 172 auf. Die Fasern 171 und 172 weisen jeweils separate Eingänge 151, 152 und Ausgänge 154, 155 auf, die an einzelne parallele Zweige eines optischen Übertragungssystems anschließbar sind.

Die Faser 171 und 172 sind in einer gemeinsamen Temperaturkammer 16 untergebracht. Die Temperatur in der Temperaturkammer 16 kann dann durch die Temperaturstelleinrichtung 19 mittels der Heizeinrichtung 156 eingestellt werden. Auf diese Weise werden die Temperaturen beider Fasern 171 und 172 gemeinsam eingestellt. Eine derartige OCET kann so in einfacher Weise die chromatische Dispersion mehrerer paralleler Zweige eines optischen Übertragungssystems gleichzeitig stabilisieren.

Im folgenden wird Bezug auf Fig. 5 genommen, welche eine weitere beispielhafte Ausführungsform eines dispersionsstabilisierten optischen Übertragungssystems, beziehungsweise einer Übertragungsstrecke 1 zeigt.

Diese Ausführungsform umfaßt mehrere optische Netzwerkelemente 60, 62, ..., die zwischen Sender 3 und Empfänger 7 entlang des optischen Übertragungspfades zwischen optischen Übertragungsfasern 51, 52,..., 5N angeordnet sind.

Die optischen Netzelemente 60, 62,... umfassen ihrerseits jeweils wieder ein oder mehrere optisch transparente Elemente. Die Netzwerkelemente, sowie der Empfänger 7 umfassen außerdem jeweils eine OCET 15. Die hier dargestellte Ausführungsform der OCET umfaßt neben einer Temperatursteuerungseinrichtung 21 außerdem einen CD-Monitor 27, welcher die chromatische Dispersion jeweils an einem der zugeordneten Meßpunkte 30, 31,...3N bestimmt. Selbstverständlich können die CD-Monitore 27 auch, ähnlich wie in Fig. 1B angedeutet ist, als separate Komponenten angeordnet sein. Die Temperatursteuerungseinheiten 21 der OCETs 15 sind untereinander über einen optischen Kontrollkanal oder optischen Überwachungskanal 107 miteinander vernetzt. Der optische Überwachungskanal 107 ist dazu bevorzugt bidirektional ausgelegt und kann beispielsweise auch über eine Telefonstandverbindung oder eine IP-Verbindung realisiert werden.

Zu den von den jeweiligen CD-Monitoren bestimmten Meßwerten der chromatischen Dispersion kommen hier als Eingangsparameter für die Temperatursteuerungen 21 so außerdem die über den optischen Überwachungskanal übertragenen Einstellungen der anderen OCETs hinzu. Vorteilhaft ist auch eine dazu ähnliche Ausführungsform, bei welcher die von den jeweiligen CD-Monitoren 27 ermittelten Meßwerte der chromatischen Dispersion über den an eine zentrale Recheneinrichtung 158 übermittelt werden. Diese kann dann die günstigsten Einstellungen der OCETs ermitteln und diesen Einstellungen entsprechende Signale an die OCETs 15 über den optischen Überwachungskanal 107 rückübermitteln.

Bezugszeichenliste

| | |
|---|---|
| 1 | optische Übertragungsstrecke |
| 3 | Sender |
| 4 | optische Signalquelle |
| 5, 50, | Übertragungsfaser |
| 7 | Empfänger |
| 9 | Detektor |
| 13 | optischer Verstärker |
| 15 | OCET |
| 16 | Temperaturkammer |
| 17, 171, 172 | dispersionskompensierende Faser |
| 19 | Einrichtung zur Einstellung einer Temperatur |
| 21 | Temperatursteuerungseinrichtung |
| 23 | Testsignal-Generator |
| 25, 29 | Koppler |
| 27 | Monitoreinrichtung |
| 30 - 3N | Meßpunkte zur Messung der chromatischen |
| 40, 41,..4N | Optisch transparentes Element |
| 100 | Breitbandiges Testsignal |

| 101 | Referenzsignal |
| 102 | Schmalbandiges Testsignal |
| 103 | Modulationsfrequenz-Gerenator |
| 105 | Modulator |
| 107 | optischer Überwachungskanal |
| 109 | Lock-In-Verstärker |
| 151, 152 | optische Eingänge von 15 |
| 154, 155 | optische Ausgänge von 15 |
| 156 | Heizvorrichtung |
| 60, 62 | optische Netzelemente |
| 158 | Recheneinrichtung |

**Patentansprüche**

1. Vorrichtung zur Einstellung der chromatischen Dispersion in einem optischen Übertragungssystem (1), welche

   - ein optisches Element mit einer temperaturabhängigen chromatischen Dispersion,
   - eine Einrichtung (19) zur Einstellung einer Temperatur oder einer Temperaturverteilung zumindest eines Bereichs des optischen Elements zum Bereitstellen einer vordefinierten chromatischen Dispersion des optischen Elements, und
   - eine Einrichtung (27) zur Messung der chromatischen Dispersion aufweist, wobei

   die Einrichtung zur Einstellung einer Temperatur oder Temperaturverteilung eine Temperatursteuerungseinrichtung (21) umfaßt, welche dazu ausgebildet ist, auf Basis von Eingangsparametern zu arbeiten, wobei die Eingangsparameter Messwerte der chromatischen Dispersion, welche von der Einrichtung (27) zur Messung der chromatischen Dispersion bestimmt werden, und Temperatureinstellungen einer Mehrzahl weiterer, zwischen dem Sender und dem Empfänger des optischen Übertragungssystems angeordneter Vorrichtungen zur Einstellung der chromatischen Dispersion umfassen.

2. Vorrichtung nach Anspruch 1, **dadurch gekennzeichnet, daß** das optische Element ein Material umfaßt, welches eine im wesentlichen monotone Abhängigkeit der
   chromatischen Dispersion von dessen Temperatur aufweist.

3. Vorrichtung nach einem der Ansprüche 1 oder 2, **dadurch gekennzeichnet, daß** das optische Element ein Material umfaßt, welches einen Dispersionskoeffizienten aufweist, der ein gegenüber dem Dispersionskoeffizienten des optischen Übertragungssystems umgekehrtes Vorzeichen aufweist.

4. Vorrichtung nach einem der Ansprüche 1 bis 3, **dadurch gekennzeichnet, daß** das optische Element eine optische Faser (17), insbesondere eine Glasfaser umfaßt.

5. Vorrichtung nach einem der Ansprüche 1 bis 4, **dadurch gekennzeichnet, daß** die Temperatursteuerungseinrichtung (21) eine Thermostateinrichtung umfaßt.

6. Vorrichtung nach einem der Ansprüche 1 bis 5, **gekennzeichnet, durch** zumindest zwei optische Elemente mit einer temperaturabhängigen chromatischen Dispersion, welche separaten Eingängen (151, 152) und Ausgängen (154, 155) zugeordnet sind, mit einer gemeinsamen Einrichtung (19) zur Einstellung einer gemeinsamen Temperatur oder Temperaturverteilung zumindest eines Bereichs der optischen Elemente (17).

7. Optisches Übertragungssystem (1), umfassend zumindest eine entlang des optischen Pfades zwischen einem Sender und einem Empfänger angeordneten Vorrichtung (15) zur Einstellung der chromatischen Dispersion des optischen Übertragungssystems (1) gemäß einem der vorstehenden Ansprüche.

8. Optisches Übertragungssystem nach Anspruch 7,
   **gekennzeichnet durch** eine Einrichtung (23, 25) zur Einspeisung eines Testsignals zur Messung der chromatischen Dispersion.

9. Optisches Übertragungssystem nach einem der Ansprüche 7 oder 8, wobei zumindest zwei entlang des optischen Pfades hintereinander angeordneten Vorrichtungen zur Einstellung der chromatischen Dispersion des optischen Übertragungssystems über einen optischen Überwachungskanal (107) miteinander verbunden sind.

10. Optisches Übertragungssystem nach einem der Ansprüche 7 bis 9, wobei zumindest zwei entlang des optischen Pfades hintereinander angeordnete Vorrichtungen zur Einstellung der chromatischen Dispersion des optischen Übertragungssystems über einen optischen Überwachungskanal (107) mit einer Recheneinrichtung (158) zur Ermittlung der Einstellungen der Vorrichtungen verbunden sind.

11. Verfahren zur Einstellung der chromatischen Dispersion in einem optischen Übertragungssystem (1) insbesondere gemäß einem der Ansprüche 7 bis 10, wobei eine vorbestimmte Temperatur oder Temperaturverteilung zumindest eines Bereichs eines optischen Elements (17), welches eine temperaturabhängige chromatische Dispersion aufweist, eingestellt wird, so daß das optische Element eine vorbestimmte chromatische Dispersion aufweist, **dadurch gekennzeichnet, daß**

- die chromatische Dispersion im optischen Übertragungssystem gemessen wird, und
- die Temperatur oder Temperaturverteilung des optischen Elements (17) auf Basis von Eingangsparametern eingestellt wird, wobei die Eingangsparameter die gemessene chromatische Dispersion im optischen Übertragungssystem und Temperatureinstellungen einer Mehrzahl weiterer, zwischen dem Sender und dem Empfänger des optischen Übertragungssystems angeordneter Vorrichtungen zur Einstellung der chromatischen Dispersion umfassen.

12. Verfahren nach Anspruch 11, **dadurch gekennzeichnet, daß** die chromatische Dispersion im optischen Übertragungssystem (1) durch Messen der Temperatur an wenigstens einer Stelle (30 - 34) im optischen Übertragungssystem (1) ermittelt wird.

13. Verfahren nach einem der Ansprüche 11 oder 12, **dadurch gekennzeichnet, daß** die Temperatur oder Temperaturverteilung des optischen Elements (17) so eingestellt wird, daß die chromatische Dispersion des optischen Übertragungssystems (1) kompensiert wird.

14. Verfahren nach einem der Ansprüche 11 bis 13, **dadurch gekennzeichnet, daß** die chromatische Dispersion zumindest eines Abschnitts des optischen Übertragungssystems durch Einspeisen und Auswerten eines Testsignals (101, 102) ermittelt wird.

15. Verfahren nach Anspruch 14, **dadurch gekennzeichnet, daß** die differentielle Phasenverschiebung wellenlängenmodulierter Testsignale zur Bestimmung der chromatischen Dispersion gemessen wird.

**Claims**

1. A device for regulating the chromatic dispersion in an optical transmission system (1), the device comprising

- an optical element having a temperature-dependent chromatic dispersion,
- means (19) for adjusting a temperature or a temperature distribution at least of an area of the optical element to provide a pre-defined chromatic dispersion of the optical element, and
- means (27) for measuring the chromatic dispersion, wherein
the means for adjusting a temperature or a temperature distribution comprises a temperature control means (21) configured to work based on input parameters, wherein the input parameters comprise measuring values of the chromatic dispersion determined by the means (27) for measuring the chromatic dispersion, and temperature adjustments of a plurality of further devices for regulating the chromatic dispersion arranged between the sender and the receiver of the optical transmission system.

2. The device according to claim 1, **characterised in that** the optical element comprises a material with a substantially monotonous dependency of the chromatic dispersion from its temperature.

3. The device according to any one of claims 1 or 2, **characterised in that** the optical element comprises a material having a dispersion coefficient with an inverse sign relative to the dispersion coefficient of the optical transmission system.

4. The device according to any one of claims 1 to 3, **characterised in that** the optical element comprises an optical fiber (17), in particular a glass fiber.

5. The device according to any one of claims 1 to 4, **characterised in that** the temperature control means (21) comprises a thermostat means.

6. The device according to any one of claims 1 to 5, **characterised by** at least two optical elements having a temperature-dependent chromatic dispersion which are assigned to separate inputs (151, 152) and outputs (154, 155), with shared means (19) for adjusting a common temperature or a common temperature distribution at least of an area of the optical elements (17).

7. An optical transmission system (1), comprising at least one device (15) for regulating the chromatic dispersion of the optical transmission system (1) according to any one of the preceding claims, the device being arranged along the optical path between a sender and a receiver.

8. The optical transmission system according to claim 7, **characterised by** means (23, 25) for feeding a test signal for the measurement of the chromatic dispersion.

9. The optical transmission system according to any one of claims 7 or 8, wherein at least two devices for regulating the chromatic dispersion of the optical transmission system arranged one after the other along the optical path are connected to each other by means of an optical monitoring channel (107).

10. The optical transmission system according to any one of claims 7 to 9, wherein at least two devices for regulating the chromatic dispersion of the optical transmission system arranged one after the other along the optical path are connected, by means of an optical monitoring channel (107), to a computing means (158) for determining the regulation settings of the devices.

11. A method for regulating the chromatic dispersion in an optical transmission system (1), particularly according to any one of claims 7 to 10, wherein a predetermined temperature or temperature distribution at least of an area of an optical element (17) having a temperature-dependent chromatic dispersion is regulated in a way that the optical element has a predetermined chromatic dispersion, **characterised in that**

   - the chromatic dispersion in the optical transmission system is measured, and
   - the temperature or temperature distribution of the optical element (17) is adjusted based on input parameters, wherein the input parameters comprise the measured chromatic dispersion in the optical transmission system and temperature adjustments of a plurality of further devices for regulating the chromatic dispersion arranged between the sender and the receiver of the optical transmission system.

12. The method according to claim 11, **characterised in that** the chromatic dispersion in the optical transmission system (1) is determined by measuring the temperature at at least one position (30 - 34) in the optical transmission system (1).

13. The method according to any one of claims 11 or 12, **characterised in that** the temperature or temperature distribution of the optical element (17) is regulated in a way that the chromatic dispersion of the optical transmission system (1) is compensated.

14. The method according to any one of claims 11 to 13, **characterised in that** the chromatic dispersion at least of a section of the optical transmission system is determined by feeding and evaluating a test signal (101, 102).

15. The method according to claim 14, **characterised in that** the differential phase shift of wavelength-modulated test signals is measured for determining the chromatic dispersion.


**Revendications**

1. Dispositif de réglage de la dispersion chromatique dans un système de transmission optique (1), comportant

   - un élément optique à dispersion chromatique en fonction de la température,
   - un dispositif (19) de réglage d'une température ou d'une distribution de température d'au moins une zone de l'élément optique pour la fourniture d'une dispersion chromatique prédéfinie de l'élément optique, et
- un dispositif (27) de mesure de la dispersion chromatique,
le dispositif de réglage d'une température ou d'une distribution de température comprenant un dispositif de commande de température (21) conçu pour fonctionner sur la base de paramètres d'entrée, les paramètres d'entrée comprenant des valeurs de mesure de la dispersion chromatique déterminées par le dispositif (27) de mesure de la dispersion chromatique, et des réglages de température d'une pluralité d'autres dispositifs de réglage de la dispersion chromatique disposés entre l'émetteur et le récepteur du système de transmission optique.

2. Dispositif selon la revendication 1, **caractérisé en ce que** l'élément optique comprend un matériau qui présente une dépendance sensiblement monotone de la dispersion chromatique vis-à-vis de sa température.

3. Dispositif selon l'une des revendications 1 ou 2, **caractérisé en ce que** l'élément optique comprend un matériau qui présente un coefficient de dispersion de signe inverse par rapport au coefficient de dispersion du système de transmission optique.

4. Dispositif selon l'une des revendications 1 à 3, **caractérisé en ce que** l'élément optique est une fibre optique (17), notamment une fibre de verre.

5. Dispositif selon l'une des revendications 1 à 4, **caractérisé en ce que** le dispositif de commande de température (21) comprend un dispositif thermostatique.

6. Dispositif selon l'une des revendications 1 à 5, **caractérisé par** au moins deux éléments optiques à dispersion chromatique en fonction de la température, associés à des entrées (151, 152) et sorties (154, 155) distinctes ayant un dispositif commun (19) de réglage d'une température ou distribution de température commune d'au moins une zone des éléments optiques (17).

7. Système de transmission optique (1), comprenant au moins un dispositif (15) de réglage de la dispersion chromatique du système de transmission optique (1) selon l'une des revendications précédentes, disposé le long d'un chemin optique entre un émetteur et un récepteur.

8. Système de transmission optique selon la revendication 7, **caractérisé par** un dispositif (23, 25) d'injection d'un signal d'essai pour la mesure de la dispersion chromatique.

9. Système de transmission optique selon l'une des revendications 7 ou 8, dans lequel au moins deux dispositifs de réglage de la dispersion chromatique du système de transmission optique disposés l'un derrière l'autre le long du chemin optique sont reliés entre eux par l'intermédiaire d'un canal de supervision optique (107).

10. Système de transmission optique selon l'une des revendications 7 à 9, dans lequel au moins deux dispositifs de réglage de la dispersion chromatique du système de transmission optique disposés l'un derrière l'autre le long du chemin optique sont reliés, par l'intermédiaire d'un canal de supervision optique (107), à un équipement de calcul (158) pour déterminer les réglages des dispositifs.

11. Procédé de réglage de la dispersion chromatique dans un système de transmission optique (1), notamment selon l'une des revendications 7 à 10, dans lequel une température ou une distribution de température prédéterminée d'au moins une zone d'un élément optique (17) à dispersion chromatique en fonction de la température est réglée de manière que l'élément optique présente une dispersion chromatique prédéterminée, **caractérisé en ce que**

- la dispersion chromatique est mesurée dans le système de transmission optique, et **en ce que**
- la température ou la distribution de température de l'élément optique (17) est réglée sur la base de paramètres d'entrée, les paramètres d'entrée comprenant la dispersion chromatique mesurée dans le système de transmission optique et des réglages de température d'une pluralité d'autres dispositifs de réglage de la dispersion chromatique disposés entre l'émetteur et le récepteur du système de transmission optique.

12. Procédé selon la revendication 11, **caractérisé en ce que** la dispersion chromatique dans le système de transmission optique (1) est déterminée en mesurant la température à au moins un point (30 - 34) dans le système de transmission optique (1).

**13.** Procédé selon l'une des revendications 11 ou 12, **caractérisé en ce que** la température ou la distribution de température de l'élément optique (17) est réglée de manière à compenser la dispersion chromatique du système de transmission optique (1).

**14.** Procédé selon l'une des revendications 11 à 13, **caractérisé en ce que** la dispersion chromatique d'au moins une partie du système de transmission optique est déterminée par injection et interprétation d'un signal d'essai (101, 102).

**15.** Procédé selon la revendication 14, **caractérisé en ce que** le décalage de phase différentiel de signaux d'essai modulés en longueur d'onde est mesuré pour déterminer la dispersion chromatique.

## Fig. 1A

## Fig. 1B

## Fig. 1C

# Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5793917 A
- CA 2302986 A1
- EP 0607782 A1
- EP 1073221 A1

**In der Beschreibung aufgeführte Nicht-Patentliteratur**

- Differential Phase-Shift Method. *Chromatic Dispersion Measurement of Single-Mode Optical Fibers by the Differential Phase Shift Method,* November 1992
- **Leonard G. Cohen.** Comparison of Single-Mode Fiber Dispersion Measurement Techniques. *Journal of Lightwave Technology,* Oktober 1985, vol. LT-3 (5
- **Barlow et al.** Technique for Direct Measurement of Single-Mode Fiber.Chromatic Dispersion. *Journal of Lightwave Techriology,* September 1987, vol. LT-5 (9
- **Schlager et al.** Precise laser-based measurements of zero-dispersion wavelength in single-mode fibers. *OFC'96 Technical Digest,* Februar 1996
- **K. Yamane.** New functionalities for advanced optical interfaces (dispersion compensation). *Workshop on IP/Optical in Chitose, Japan,* 09. Juli 2002
- **K.S.Kim et al.** Temperature dependence of chromatic dispersion iun dispersion shifted fibers: experiment and analysis. *Journal Appl. Phys.,* 1993, vol. 73, 2069-2074
- **T.Kato ; Y.Koyano ; M.Nishimura.** Temperature dependence of chromatic dispersion in various types of optical fiber. *Opt. Lett.,* 2000, vol. 25 (16), 1156-1158